(19) Europäisches Patentamt / European Patent Office / Office européen des brevets

(11) **EP 4 485 351 A1**

(12) **EUROPEAN PATENT APPLICATION**

(43) Date of publication:
**01.01.2025 Bulletin 2025/01**

(21) Application number: **23315261.0**

(22) Date of filing: **29.06.2023**

(51) International Patent Classification (IPC):
**G06T 7/11** (2017.01)    **G06T 7/194** (2017.01)

(52) Cooperative Patent Classification (CPC):
**G06T 7/11; G06T 7/194;** G06T 2207/10088;
G06T 2207/10101; G06T 2207/10104;
G06T 2207/10108; G06T 2207/10112;
G06T 2207/10116; G06T 2207/10132;
G06T 2207/20081; G06T 2207/20104;
G06T 2207/30004

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SUPERSONIC IMAGINE**
**13290 Aix en Provence (FR)**

(72) Inventor: **Zhang, Bo**
**13109 Simiane-Collongue (FR)**

(74) Representative: **Paustian & Partner**
**Patentanwälte mbB**
**Oberanger 32**
**80331 München (DE)**

(54) **A METHOD OF REFINING A SEGMENTATION MASK**

(57)    The invention relates to a method of refining a segmentation mask, the method comprising:
providing a first segmentation mask associated with a region of interest in an image,
providing a user input comprising a user-defined area of the image,
obtaining a second segmentation mask by refining the first segmentation mask based on image data of the image using a computer-implemented algorithm, wherein the algorithm is configured to penalize a violation of the user input.

100

S1 (optional): providing an image

S2: providing a first segmentation mask

S3 (optional): displaying first segmentation mask

S4: providing a user input

S5: obtaining a second segmentation mask

S6 (optional): displaying second segmentation mask

S7 (optional): iteration loop

Fig. 1

**Description**

BACKGROUND

Image segmentation has various functions for processing image data, for example in the context of image detection, image content detection or image classification.

In medical imaging methods, image segmentation may for instance serve for an automated or semi-automated, lesion or ROI (region of interest) detection. Examples of medical imaging methods comprise ultrasound imaging, mammography and tomosynthesis, and other.

Computer aided image segmentation has become important to such fields as cardiology, oncology, radiology, and other areas of medicine. With the advent of deep learning and other artificial intelligence (AI) technologies, the ability of computers to perform vision tasks such as identification, localisation and generation has become popular. For example, Convolutional Neural Networks (CNNs) have proven particularly effective towards the task of image segmentation and therefore can be leveraged to solve lesion segmentation tasks in the medical filed, as well as in other areas.

However, such technologies may not be perfect. Consequently, an examining person, for example a doctor, physicist or radiologist, may wish or have to review and in some cases adapt the results in view of his/her skills and experience.

Conventional solutions for manually post-processing automatically predicted segmentation masks are rather cumbersome and not intuitive, leading to ultimately extended time and efforts.

In view of the above, there is a need to solve such drawbacks and associated disadvantages.

SUMMARY OF THE DISCLOSURE

A computer-implemented method of refining a segmentation mask is provided, comprising:

providing a first segmentation mask associated with an image,
providing a user input comprising a user-defined area of the image,
obtaining a second segmentation mask by refining the first segmentation mask based on image data of the image using a computer-implemented algorithm, wherein the algorithm is configured to penalize a violation of the user input.

By providing such a method, it becomes possible to refine a first segmentation mask based on user hints, i.e. the user input. For example, a user may input hints on regions to include or exclude the region(s) from the first segmentation mask in a fuzzy manner. Obtaining the second segmentation mask may be automatically guided by the user's hints. According to the present method, the first segmentation mask may become user-adaptive. The adaptation or refinement of the first segmentation mask may thereby be considered as at least semi-automatically, as the user only needs to provide fuzzy user hints instead of a precise modification of the mask, leading to advantageous saving of his/her time and efforts.

The user input may thus also be referred to as user constraints.

The first segmentation mask may for example be automatically generated by a computer-implemented algorithm, for instance based on an AI-based algorithm.

The first segmentation mask may be associated with a region of interest in the image. The region of interest may be associated with only a part of the image. Accordingly, the first segmentation mask may cover for example only a part of the image, i.e. the region of interest (ROI).

The user-defined area of the image may be adapted by the user to modify the first segmentation mask. In other words, the user-defined area of the image may be determined and/or adjusted by the user in order to modify the first segmentation mask.

Modifying the segmentation mask may thus imply extending the first segmentation mask and/or reducing the first segmentation mask.

For example, the user-defined area may comprise a first user-defined area adapted by the user to extend the first segmentation mask.

In a further example, the user-defined area may comprise a second user-defined area adapted by the user to restrict the first segmentation mask.

The algorithm may be configured to modify the first segmentation mask based on the user-defined area in a fuzzy manner by applying a penalization rule. The penalization rule may be predefined or may be defined or selected by the user or the system during the method of the present disclosure is performed. The penalization rule may also be preset and/or predefined, and adapted or adaptable during the method of the present disclosure is performed.

For example, the user-defined area may be used as a soft criterion based on which the first segmentation mask may be modified.

For example, the algorithm may be configured to include the first user-defined area into the first segmentation mask in a fuzzy manner by applying a penalization rule.

In a further example, the algorithm may be configured to exclude the second user-defined area from the first segmentation mask in a fuzzy manner, by applying a penalization rule.

The algorithm may comprise at least a penalization rule.

According to an example, the penalization rule may be configured to penalize a violation of the user-defined area.

According to a further example, the penalization rule may be configured to penalize a violation of extending the first segmentation mask by the first user-defined area. In other words, this case concerns the condition that the basically refined first segmentation mask, as basically refined based on the image data, does not match with the first user-defined area. Accordingly, the basic refinement based on the image data may be considered as a violation of the user input. This violation may be penalized.

According to a further example, the penalization rule may be configured to penalize a violation of excluding the second user-defined area from the first segmentation mask. In other words, this case concerns the condition that the basically refined first segmentation mask, as basically refined based on the image data, does not fully exclude the second user-defined area. Accordingly, the basic refinement based on the image data may be considered as a violation of the user input. This violation may be penalized.

The user input may further comprise a user-defined confidence level which may be associated with the user-defined area. The algorithm may be configured to penalize a violation of the user input as a function of the user-defined confidence level.

For example, parameters may be given in the method such that confidence on the user input can be tuned, for example manually by the user. In other words, the user input may be addressed in a fuzzy framework, such that the confidence can be adjusted in the automatic segmentation, as also described below. This advantageously provides more flexibility on user error tolerance.

The image data may comprise statistical criteria on image features, for example low-level image features. The image features may comprise for example at least one of contours, edges, angles, intensity, color, motion and/or texture.

The image data may be used by the algorithm to discriminate between image regions to refine the first segmentation mask.

The algorithm may be configured to exploit statistics of local likelihood, and/or contextual distributions based on the image data to adjust a segmentation boundary of the first segmentation mask.

The algorithm may be based on a predefined function

$$\arg\min_{\Phi} J(\Phi) = D(\Phi) + F(\Phi) + R(\Phi) \ (1)$$

$\Phi$ may be an implicit level-set function, wherein either $\{x|\Phi(x) < 0\}$ (assumed in the equation examples below) or $\{x|\Phi(x) > 0\}$ optionally represents an image area inside the first segmentation mask.

"x" may be an image point, for example a pixel, a voxel, or a point of any dimension. The function $D(\Phi)$ may represent a penalization term configured to penalize a reduced level of fitting of the first segmentation mask compared to the image data. Accordingly, the function $D(\Phi)$ may represent the penalization of bad fitness of the first segmentation mask compared to image data.

The function $F(\Phi)$ may be configured to penalize a violation of the user input. Accordingly, the function $F(\Phi)$ may for example represent the fuzzy penalization of the violation of the user input by the segmentation.

The function $R(\Phi)$ may represent a regularization penalization term of the segmentation mask.

The algorithm, for example the function $D(\Phi)$, may be configured to compare the local distribution around each of a plurality of image points to the distribution of an image area inside the first segmentation mask and that of outside the first segmentation mask, such that points of similar contextual information may be grouped together in the second segmentation mask.

For example, the algorithm may use an optimal transport metric (for example a Weisserstein metric) to compare the distributions. For instance, the optimal transport metric may be defined by the function $D(\Phi)$.

For instance, the optimal transport metric may be defined in the predefined function $\arg\min_{\Phi} J(\Phi)$ by the term, and/or the function $D(\Phi)$ may comprise the term:

$$D(\Phi) = \alpha_1 \int_{\Omega} H(\Phi) W_1(p(\mathbf{x}), p_{out}) d\mathbf{x} + \alpha_1 \int_{\Omega} \big(1 - H(\Phi)\big) W_1(p(\mathbf{x}), p_{in}) d\mathbf{x} \ (2)$$

wherein:

$\Omega$ may be the domain where the segmentation is performed, for example the whole area of the image,
$\alpha_1 \geq 0$ may be a weight of the terms of the distribution similarity, for example a predefined weight,
$H(\Phi)$ may be the Heaviside function,
$W_1$ may be the optimal transport metric e.g. 1-Weisserstein metric,
$p(\mathbf{x})$ may be the local distribution about the point x, for example a pixel, a voxel, or a point of any dimension,
$p_{out}$ may be the distribution of the pixels outside the segmentation mask,
$p_{in}$ may be the distribution of the points inside the segmentation mask.

An image point may comprise an image pixel, an image voxel, or an image point of any dimension.

The algorithm, for example the function $D(\Phi)$, may be configured to take into account local likelihood information, such that points likelihoods from an image area inside the first segmentation mask from an image area outside the first segmentation mask may be in competition, which separates the points of the image inside area from the image outside area,

For example, the function $D(\Phi)$ may comprise the term:

$$D(\Phi) = -\alpha_2 \int_\Omega H(\Phi) \log p_{out}\big(I(\mathbf{x})\big)\, d\mathbf{x} - \alpha_2 \int_\Omega \big(1 - H(\Phi)\big) \log p_{in}\big(I(\mathbf{x})\big)\, d\mathbf{x} \quad (3)$$

wherein:

$\alpha_2 \geq 0$ may be a weight of the likelihood terms, for example a predefined weight, $I(\mathbf{x})$ may be the value of the point x in the image I.

The penalization rule may be defined, for instance in the predefined function $\underset{\Phi}{\arg\min}\, J(\Phi)$, by the term:

$$F(\Phi) = \int_\Omega M_{in}(x) P(v \cdot \Phi)\, dx + \int_\Omega M_{out}(x) P(-v \cdot \Phi)\, dx \quad (5)$$

wherein:

$M_{in}$ may be a mask of all points inside the user-defined area where the segmentation mask should extend into,
$M_{out}$ may be a mask of all points outside the user-defined area where the segmentation mask should be restricted from,
$v(x)$ may be a user-defined penalization weight map, i.e. a map of the user-defined confidence levels. For example, $v(x)$ may be a function of location x in the image and/or the segmentation mask (so becomes a map). For instance, the user may be more confident in inclusion constraint (i.e. mask $M_{in}$), and less confident in exclusion constraint (i.e. mask $M_{out}$). For this reason, the confident level $v(x)$ may be associated to each location.
$P(s)$ may be a monotone non-decreasing function as a function of the input value s. Accordingly, the input value s may be used to designate for example the input value of the function P. In one example, the input value s may be the value of $(v \cdot \Phi)$ or $(-v \cdot \Phi)$.

The algorithm, for example the function $R(\Phi)$, may be configured to smooth the segmentation boundary of the second segmentation mask. The function $R(\Phi)$ may be defined, for instance in the predefined function $\underset{\Phi}{\arg\min}\, J(\Phi)$, by the term:

$$R(\Phi) = \lambda \int_\Omega |\nabla H(\Phi)|\, d\mathbf{x} \quad (4)$$

wherein :
$\lambda > 0$ may be weight of the regularization term.

Therefore, according to a particular example, the predefined function $\underset{\Phi}{\arg\min}\, J(\Phi)$ may be defined by:

$$\arg\min_{\Phi} J(\Phi) = \alpha_1 \int_{\Omega} H(\Phi) W_1(p(\mathbf{x}), p_{out}) d\mathbf{x} + \alpha_1 \int_{\Omega} \big(1 - H(\Phi)\big) W_1(p(\mathbf{x}), p_{in}) d\mathbf{x}$$

$$- \alpha_2 \int_{\Omega} H(\Phi) \log p_{out}\big(I(\mathbf{x})\big) d\mathbf{x} - \alpha_2 \int_{\Omega} \big(1 - H(\Phi)\big) \log p_{in}\big(I(\mathbf{x})\big) d\mathbf{x}$$

$$+ \int_{\Omega} M_{in}(x) e^{\nu \cdot \Phi} dx + \int_{\Omega} M_{out}(x) e^{-\nu \cdot \Phi} dx + \lambda \int_{\Omega} |\nabla H(\Phi)| dx$$

$$(7)$$

The first segmentation mask may be automatically generated by a computer-implemented algorithm.

The image may be a medical image and/or an image obtained by a medical imaging system, optionally an ultrasound imaging system.

According to one or several examples, the first and/or second segmentation mask may be displayed on a display device.

The first segmentation mask may be displayed on a display device.

The user input may be received via an input device.

The user input and the first segmentation mask may be provided to a computing device.

The computer-implemented algorithm may be performed by the computing device to obtain the second segmentation mask.

The second segmentation mask may be displayed on the display device, optionally adjacent to or instead of the first segmentation mask.

The method may be iterated. For example, the second segmentation mask of an iteration N may be used as a first segmentation mask in an iteration N+1.

The method, and for instance the computer-implemented algorithm, may be performed at least partially in real-time or pseudo real time. For example, obtaining a second segmentation mask by refining the first segmentation mask may be performed in real-time or in quasi real-time, such that a user providing the user input does not perceive any significant delay between inputting the user input and obtaining the second segmentation mask.

The present disclosure may further relate to a method of generating a training dataset for an artificial intelligence (AI) algorithm, comprising:

applying the method of any one of the preceding claims to a plurality of first segmentation masks to obtain a plurality of second segmentation masks,
generating the training dataset based the plurality of second segmentation masks and optionally the plurality of first segmentation masks.

The present disclosure may further relate to a method of training an artificial intelligence (AI) algorithm, comprising:

performing the method of the preceding claim to obtain a training dataset,
training the artificial intelligence (AI) algorithm in a supervised manner using the training dataset, wherein the plurality of first segmentation masks may be used as input during training and the plurality of second segmentation masks may be used as target output.

Examples of artificial intelligence (AI) algorithms may comprise machine learning models, such as decision trees, random forests, logistic regression, gradient boosting, neural networks, such as Convolutional Neural Networks (CNNs), and/or support vector machines. Predefined algorithms may be used to perform classification and prediction tasks, such as image recognition. For example, a decision tree algorithm may be used to classify images of objects based on their features. Other examples of machine leaning models may comprise deep learning models, such as neural networks, k-nearest neighbors, and/or clustering algorithms, which may be used for tasks such as anomaly detection and data segmentation. AI may refer to the development of computer systems and algorithms that may perform tasks that typically require human intelligence, such as visual perception. AI systems and algorithms may be trained using large sets of data and sophisticated algorithms that may allow them to identify patterns and trends, make predictions, and optimize outcomes.

The present disclosure may further refer to a computing device, comprising:

at least one processor, and

at least one memory storing computer-executable instructions, the computer-executable instructions when executed by the processor cause the computing device to perform a method according to any one of the preceding claims.

For example, the computing device may be configured to calculate or receive from an external system a first segmentation mask associated with an image, receive a user input comprising a user-defined area of the image, obtain or calculate a second segmentation mask by refining the first segmentation mask based on image data of the image using a computer-implemented algorithm, wherein the algorithm is configured to penalize a violation of the user input.

The computer-executable instructions may for instance comprise the computer-implemented algorithm.

The computing device may be configured to be associated with a display device, such that the first and/or second segmentation masks may be displayed on the display device.

The computing device may be configured to be associated with an input device configured to receive the user input and to provide it to the computing device.

The processor (or processing unit) may be a component of electronic devices that may be responsible for carrying out computational tasks. A processing unit may be or may comprise a Central Processing Unit (CPU), Graphics Processing Unit (GPU), Digital Signal Processor (DSP), Field-Programmable Gate Array (FPGA), and/or Application-Specific Integrated Circuit (ASIC). The method according to the present disclosure may also run on a virtual server.

The present disclosure may also relate to a system for refining a segmentation mask, the system comprising means for carrying out the method according to any examples of the present disclosure. For example, the system may comprise or may be a computing device, as described above.

The present disclosure may also relate to an imaging system (e.g., ultrasound imaging) comprising means for carrying out the method according to any examples of the present disclosure.

The present disclosure may also relate to a computer program comprising instructions which, when the program is executed by a computer, cause the computer to carry out the method according to any examples of the present disclosure.

The present disclosure may also relate to a computer-readable medium comprising instructions which, when executed by a computer, cause the computer to carry out the method according to any examples of the present disclosure.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

BRIEF DESCRIPTION OF THE DRAWINGS

Fig. 1 schematically shows a method of refining a segmentation mask according to examples of the present disclosure.

Fig. 2 shows a method of obtaining second segmentation mask according to examples of the present disclosure.

Fig. 3 shows a method of training an artificial intelligence (AI) algorithm according to examples of the present disclosure.

Fig. 4 shows method of providing and processing a user input according to examples of the present disclosure.

Fig. 5a shows a schematic example of an image according to operation S1 of the method of Fig. 1.

Fig. 5b shows a schematic example of a first segmentation mask according to operations S2 and S3 of the method of Fig. 1.

Fig. 5c shows a schematic example of a first segmentation mask and a user input according to operation S4 of the method of Fig. 1.

Fig. 5d shows a schematic example of a second segmentation mask according to operations S5 and S6 of the method of Fig. 1.

Fig. 6 shows a schematic drawing of an ultrasound system 10 according to examples of the present disclosure.

DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

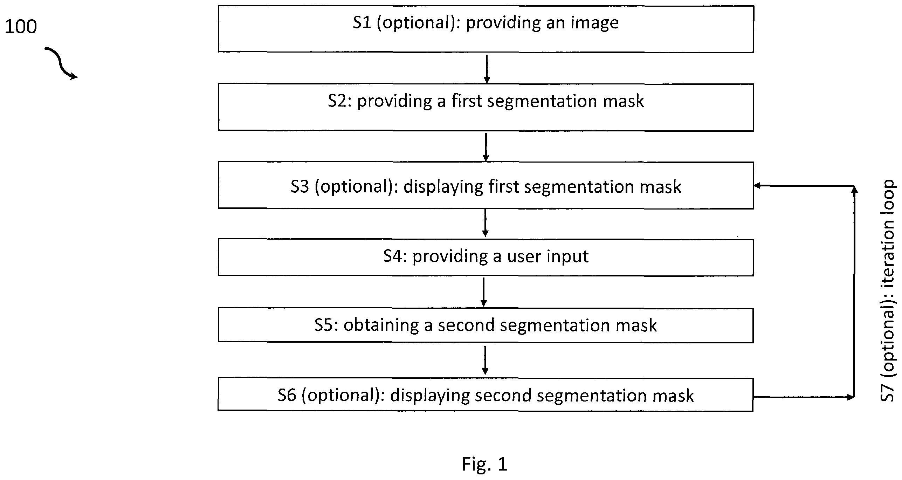

Fig. 1 schematically shows a method of refining a segmentation mask according to examples of the present disclosure. The method may comprise a plurality of operations. One or several operations may for example be implemented by a respective software module.

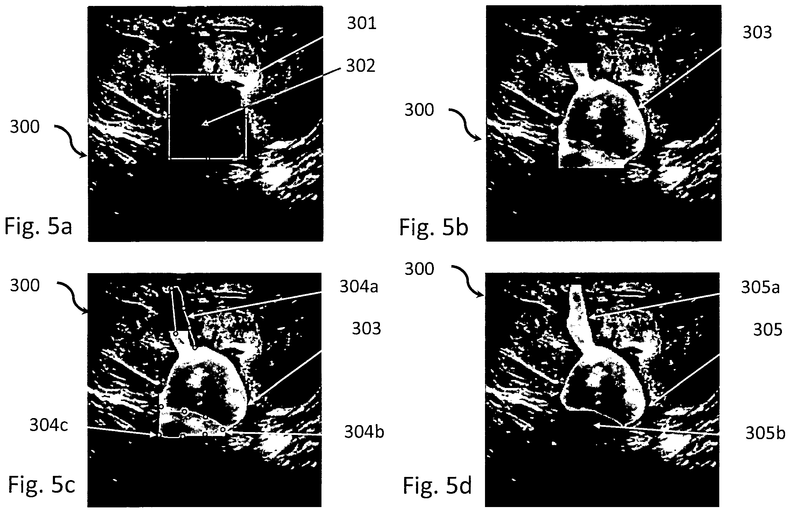

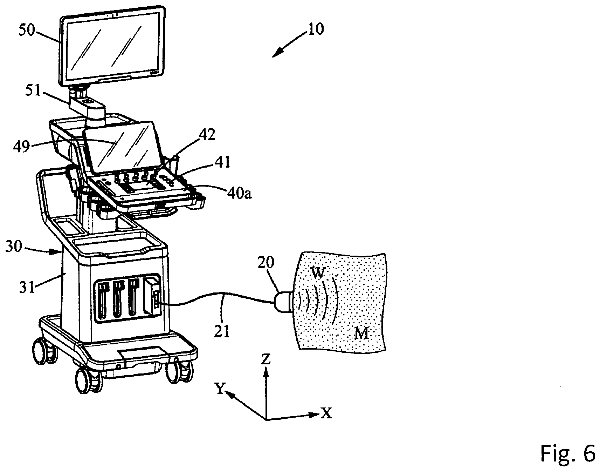

In a first optional operation S1, an image may be provided. Fig. 5a shows an example of an image 300a. The image may for example be provided by an imaging system, for instance a medical imaging system. The image may be associated with a medium scanned by the imaging system. For example, the imaging system may comprise at least one of: mammography, tomosynthesis, magnetic resonance imaging (MRI), single-photon emission computerized tomography (SPECT) scan, positron emission tomography (PET) scan, optical coherence tomography (OCCT), optical tomography (OCT), X-ray exam, and ultrasound imaging. An exemplary ultrasound system is shown in fig. 6. In general, the image may be obtained by a first system which performs the method of fig. 1 or the image may be prepared or obtained by a second system and provided to the first system.

In an operation S2, a first segmentation mask is provided. For example, the first segmentation mask may be obtained in operation S2, based on image data of the image of operation S1. The first segmentation mask may be associated with a region of interest, ROI, in the image. The ROI may be or may comprise a lesion in the medium, for example a human or animal tissue.

In one example the first segmentation mask may be obtained by detecting and segmenting a region of interest (ROI) in the medium. For example, a predefined computer-implemented segmentation algorithm may be used, for example an AI based algorithm, as for example a neural network, such as a convolutional neural network (CNN). The region of interest may be associated with only a part of the image. Accordingly, the first segmentation mask may cover for example only a part of the image, i.e. the region of interest (ROI).

However, it is also possible that the image and/or the first segmentation mask is merely obtained from a communication interface, a data storage or there like. For example, the image and/or the first segmentation mask may be predetermined and/or pre-stored and provided to a system performing the method according to the present disclosure.

In an optional operation S3, the first segmentation mask may be displayed. For example, the first segmentation mask may be displayed on top of the image, as shown in the example illustrated in fig. 5b.

In an operation S4 a user input is provided. The user input may comprise a user-defined area, as for example shown in fig. 5c. The user-defined area of the image may be provided by the user to modify the first segmentation mask.

In an operation S5 a second segmentation mask is obtained by refining the first segmentation mask based on image data of the image using a computer-implemented algorithm. The algorithm thereby penalizes a violation of the user input.

In an optional operation S6 the second segmentation mask may be displayed. The second segmentation mask may be displayed on the display device, optionally adjacent to or instead of the first segmentation mask. The latter case is shown in the example of fig. 5d.

The method may be iterated in an operation S7. For example, the second segmentation mask of an iteration N may be used as a first segmentation mask in an iteration N+1. Accordingly, a user may successively refine the segmentation mask by modifying the (first) segmentation mask in each iteration.

The method may be performed at least partially in real-time. For example, obtaining the second segmentation mask in operation S5 may be performed in real-time or in quasi real-time, such that a user providing the user input does not perceive any significant delay, when concentrating on the image displayed on a display device.

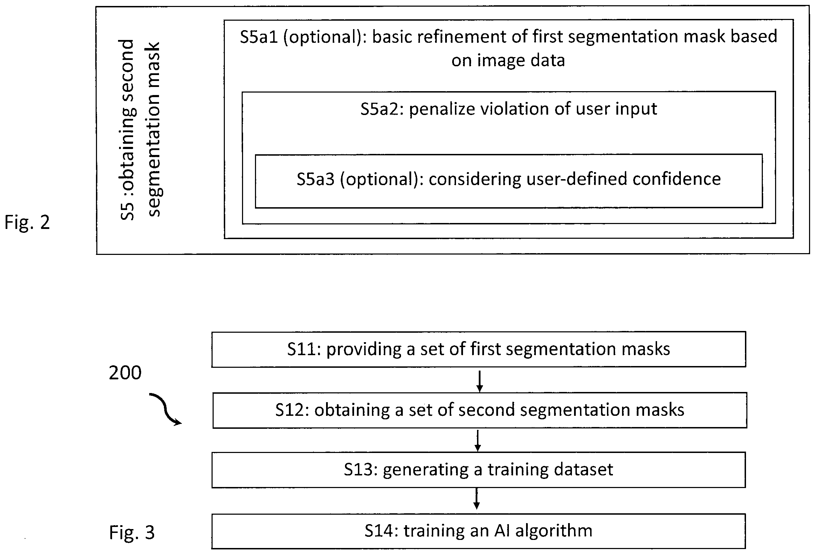

Fig. 2 shows a method of obtaining second segmentation mask according to examples of the present disclosure. The method of fig. 2 may correspond to or be a particular example of the operation S5 of the method of fig. 1. The method of fig. 2, in particular the operation S5, may be performed by the computer-implemented algorithm according to the present disclosure.

The operation S5 may comprise a basic refinement operation S5a1, wherein the first segmentation mask is basically refined, for instance based on image data.

The image data may comprise statistical criteria on image features, for example low-level image features. The image features may comprise for example at least one of contours, edges, angles, intensity, color, motion and/or texture. The image data may be used by the algorithm to discriminate between image regions to refine the first segmentation mask.

The operation S5a1 may be performed using the algorithm, or some rules defined by the algorithm, as described in the following. The algorithm may be configured to exploit statistics of local likelihood, and/or contextual distributions based on the image data to adjust a segmentation boundary of the first segmentation mask. The algorithm may be configured to be adaptable based on a characteristic of the medium scanned by the imaging system, for example the type of medium (for instance a type of organ, such as a liver or a breast).

The algorithm may be based on a predefined function

$$\arg \min_{\Phi} J(\Phi) = D(\Phi) + F(\Phi) + R(\Phi) \qquad (1)$$

$\Phi$ may be an implicit level-set function, wherein either $\{x|\Phi(x) < 0\}$ (assumed in the equation examples below) or $\{x|\Phi(x) > 0\}$

optionally represents an image area inside the first segmentation mask. "x" may be an image point, for example a pixel, a voxel, or a point of any dimension.

The function $D(\Phi)$ may represent a penalization term configured to penalize a reduced level of fitting of the first segmentation mask compared to the image data. Accordingly, the function $D(\Phi)$ may represent the penalization of bad fitness of the first segmentation mask compared to image data. Accordingly, in case of a reduced level of fitting (i.e. a relatively bad fitness) the penalization according to function $D(\Phi)$ may be increased.

The function $F(\Phi)$ may be configured to penalize a violation of the user input. Accordingly, the function $F(\Phi)$ may for example represent the fuzzy penalization of the violation of the user input by the segmentation.

The function $R(\Phi)$ may represent a regularization penalization term of the segmentation mask.

The algorithm, for example the function $D(\Phi)$, may be configured to compare the local distribution around each of a plurality of image points to the distribution of an image area inside the first segmentation mask and that of outside the first segmentation mask, such that points of similar contextual information may be grouped together in the second segmentation mask.

For example, the algorithm may use an optimal transport metric (for example a Weisserstein metric) to compare the distributions. For instance, the optimal transport metric may be defined by the function $D(\Phi)$.

In one example, the optimal transport metric may be defined in the predefined function $\underset{\Phi}{\arg\min} J(\Phi)$ by the term, and/or the function $D(\Phi)$ may comprise the term:

$$D(\Phi) = \alpha_1 \int_\Omega H(\Phi) W_1(p(\mathbf{x}), p_{out}) d\mathbf{x} + \alpha_1 \int_\Omega \big(1 - H(\Phi)\big) W_1(p(\mathbf{x}), p_{in}) d\mathbf{x} \quad (2)$$

wherein:

$\alpha_1 \geq 0$ may be a weight of the terms of the distribution similarity, $\Omega$ may be the domain where the segmentation is performed, for example the whole area of the image,

$H(\Phi)$ may be the Heaviside function,

$W_1$ may be the optimal transport metric e.g. 1-Weisserstein metric,

$p(\mathbf{x})$ may be the local distribution about the point x, for example a pixel, a voxel, or a point of any dimension,

$p_{out}$ may be the distribution of the pixels outside the segmentation mask

$p_{in}$ may be the distribution of the points inside the segmentation mask

An image point may comprise an image pixel, an image voxel, or an image point of any dimension.

The algorithm, for example the function $D(\Phi)$, may be further configured to take into account local likelihood information, such that points likelihoods from an image area inside the first segmentation mask from an image area outside the first segmentation mask may be in competition, which separates the points of the image inside area from the image outside area.

For example, the function $D(\Phi)$ may comprise the term:

$$D(\Phi) = -\alpha_2 \int_\Omega H(\Phi) \log p_{out}\big(I(\mathbf{x})\big) d\mathbf{x} - \alpha_2 \int_\Omega \big(1 - H(\Phi)\big) \log p_{in}\big(I(\mathbf{x})\big) d\mathbf{x} \quad (3)$$

wherein:

$\alpha_2 \geq 0$ may be weight of the likelihood terms,

$I(\mathbf{x})$ may be the image.

The algorithm, for example the function $R(\Phi)$, may be configured to smooth the segmentation boundary of the second segmentation mask. The function $R(\Phi)$ may be defined, for instance in the predefined function $\underset{\Phi}{\arg\min} J(\Phi)$, by the term:

$$R(\Phi) = \lambda \int_\Omega |\nabla H(\Phi)| d\mathbf{x} \quad (4)$$

wherein :
$\lambda > 0$ may be a weight of the regularization term.

The operation S5 and/or S5a1 comprises an operation S5a2 for penalizing a violation of the user input through the basic refinement operation.

For example, the algorithm may comprise a penalization rule. The penalization rule may be configured to penalize a violation of the user-defined area.

The user-defined area may be used for example as a soft criterion based on which the first segmentation mask may be modified. For Instance, the algorithm may be configured to include the first user-defined area into the first segmentation mask in a fuzzy manner by applying a predefined penalization rule. In a further example, the algorithm may be configured to exclude the second user-defined area from the first segmentation mask in a fuzzy manner by applying a penalization rule.

The penalization rule may be defined, for instance, in the predefined function $\arg\min_{\Phi} J(\Phi)$, by the term:

$$F(\Phi) = \int_{\Omega} M_{in}(x) P(v \cdot \Phi) dx + \int_{\Omega} M_{out}(x) P(-v \cdot \Phi) dx \quad (5)$$

wherein:

$M_{in}$ may be a mask of all points inside the user-defined area where the segmentation mask should extend into;
$M_{out}$ may be a mask of all points outside the user-defined area where the segmentation mask should be restricted from.
$v(x)$ may be a user-defined penalization weight map, i.e. a map of the user-defined confidence levels,
$P(s)$ may be a monotone non-decreasing function as a function of the input value s.

Hence, the computer-implemented algorithm may basically be configured to refine the first segmentation mask based on image data of the image, cf. operation S5a1. However, in this context the algorithm penalizes a violation of the user input, i.e. constrains the basic refinement based on image data in view of the user input, cf. S5a2. Accordingly, in case the user-defined area does not match the basic refinement, this basic refinement is constrained to better respect the user-defined area.

The operation S5, S5a1 and/or S5a2 may comprise an optional operation S5a3 of considering a user-defined confidence level.

For example, the user input may further comprise a user-defined confidence level which may be associated with the user-defined area.

The algorithm may be configured to penalize a violation of the user input as a function of the user-defined confidence level.

For example, parameters may be given in the method such that confidence on the user input can be tuned, for example manually by the user.

The penalization rule may be defined in a particular example of the term (5), for instance in the predefined function $\arg\min_{\Phi} J(\Phi)$, by the term:

$$F(\Phi) = \int_{\Omega} M_{in}(x) e^{v \cdot \Phi} dx + \int_{\Omega} M_{out}(x) e^{-v \cdot \Phi} dx \quad (6)$$

wherein:

$M_{in}$ may be a mask of all points inside the user-defined area where the segmentation mask should extend into;
$M_{out}$ may be a mask of all points outside the user-defined area where the segmentation mask should be restricted from.

Fig. 3 shows an exemplary method of training an artificial intelligence (AI) algorithm according to examples of the present disclosure.

In an operation S11 a set (i.e. a plurality) of first segmentation masks may be provided. Optionally, the operation may include providing images which are respectively associated with the first segmentation masks. The images are desirably different to each other and/or the segmentation masks are desirably different to each other.

Said first segmentation masks may correspond to the segmentation mask of operation S2 of fig. 1. Accordingly, the operation S11 may correspond to a plurality of operations S2 providing different first segmentation masks.

In an operation S12 a plurality of second segmentation masks may be obtained. Said second segmentation masks may correspond to the segmentation mask of operation S5 of fig. 1. Accordingly, the operation S12 may correspond to a plurality of operations S5 providing different second segmentation masks. In other words, the second segmentation masks may be obtained using the method according to the present disclosure.

In an operation S13 a training dataset may be generated. The training dataset may comprise a set of samples. Each sample may comprise a first segmentation mask and/or the associated second segmentation mask, optionally together with the associated image.

In an operation S14, an artificial intelligence (AI) algorithm may be trained using the training dataset. Examples of artificial intelligence (AI) algorithms may comprise machine learning models, such as decision trees, random forests, logistic regression, gradient boosting, neural networks, such as Convolutional Neural Networks (CNNs), and/or support vector machines.

For example, the AI algorithm may be trained in a supervised manner using the first segmentation masks and/or the respective images as input and the respective second segmentation masks as target output.

In this way the AI algorithm may learn to predict a second refined segmentation mask based on an image and/or a first segmentation mask. The trained AI algorithm may hence automate or at least partially automate the manual work of providing a user input.

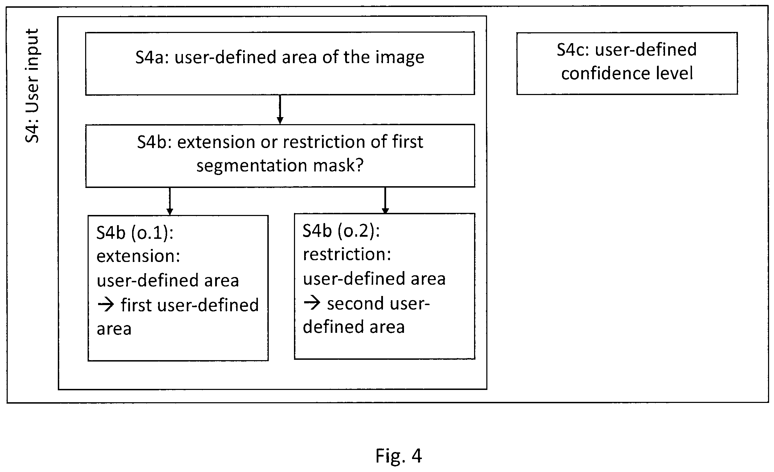

Fig. 4 shows method of providing and processing a user input according to examples of the present disclosure.

The method of fig. 4 may correspond to or be a particular example of the operation S4 of the method of fig. 1. The method of fig. 2, in particular the operation S4, may be performed by a software module configured to receive and optionally process the user input.

The operation S4 comprises an operation S4a of providing a user-defined area of the image. For example, the user defined area may be provided by a user by manually drawing the area using a user interface device associated with a computing device on which the method is running. The user interface device may be for example a touch screen device (for instance the control panel display screen 49 illustrated on fig. 6).

In operation S4b it may be determined whether the user-defined area is intended to be an extension or restriction of first segmentation mask. For example, the method or the respective software module may be associated with additional input means, which can be used by the user to select the type of user-defined area. The additional input means may be for instance one or several physical or software-implemented buttons of a user interface device.

It is also possible that the type of user-defined area is detected automatically by the method. For example, in case more than 50% of the user-defined area is outside the first segmentation mask (cf. for example the user-defined area 304a illustrated in fig. 5c), it may be determined that the user-defined area is intended to extend the first segmentation mask. Moreover, in case more than 50% of the user-defined area is inside the first segmentation mask (cf. for example the user-defined area 304b as shown in fig. 5c), it may be determined that the user-defined area is intended to be removed from the first segmentation mask.

Accordingly, in operation S4b (0.1), i.e. in option 1 of operation S4b, the user-defined area may be labelled as first user-defined area, which is intended to be added to the first segmentation mask. Moreover, in operation S4b (o.2), i.e. in option 2 of operation S4b, the user-defined area may be labelled as second user-defined area, which is intended to be removed from the first segmentation mask.

In addition, the operation S4 may comprise providing a user-defined confidence level for each provided user-defined area. For example, the user-defined confidence level may be associated with the user-defined area. In one example, the user-defined confidence level may be a number between 0 and 100 which may be manually inputted by the user using the user interface device.

The user-defined area, in particular the first and/or second user-defined area, optionally together with one or several confidence levels, may then be handed over to the operation S5 or its above-mentioned respective algorithm, in which the second segmentation mask is obtained.

The methods of fig. 1, 2 and 4 are described in more details below in context of the examples of fig. 5a to 5d.

Fig. 5a shows a schematic example of an image according to operation S1 of the method of Fig. 1.

The image 300 may be for example an ultrasound image, or any other type of image, as described above in context of operation S1 in fig. 1. In particular, the image may display an ultrasound scanned medium. The medium can be for example a part of a human body or animal or material. The image may be displayed on a display device, as described above and in the context of fig. 6 below.

The image may comprise a region of interest 302, for example a suspected lesion in the medium. In one example, the region of interest may be manually selected by a user by drawing a bounding box 301 comprising the region of interest. In other examples, the region of interest is automatically determined, detected.

Fig. 5b shows a schematic example of a first segmentation mask according to operations S2 and S3 of the method of Fig. 1.

The first segmentation mask 303 may automatically be determined, as described above in context of operation S2 of fig. 1. The determination may also be based on the manually drawn bounding box 301.

The first segmentation mask 303 may be displayed together with the image 300, in particular by overlaying the image 300. The first segmentation mask 303 may thus indicate the borders of the region of interest, e.g. of a supposed lesion in a scanned medium, a muscle, an organ or part of it.

A user, for example an examining person, such as a physician or radiologist, may wish to review and in some cases adapt the first segmentation mask 303 in view of his/her skills and experience. In particular, the user may wish to modify the border of the first segmentation mask by local extension and/or limitation of the mask. An example of addressing this problem is shown in figures 5c and 5d.

Fig. 5c shows a schematic example of a first segmentation mask and user input according to operation S4 of the method of Fig. 1.

The system and method may provide means allowing the user to interact in order to provide a user-defined area likely to be included in the ROI, and an area likely to be excluded.

In this example, the user has provided two user-defined areas 304a and 304b, e.g. by drawing lines on the display device, and/or by setting one or several marker points 304c which define the border of the user-defined area.

As described in context of fig. 4, based on a manual user selection and/or based on an automated determination, the user-defined area 304a may be labelled as first user-defined area, which is intended to be added to the first segmentation mask. Moreover, the user-defined area 304b may be labelled as second user-defined area, which is intended to be removed from the first segmentation mask.

In addition, as described in context of fig. 4, the user may additionally input a user-defined confidence level (or levels) for one or each or some of the user-defined areas 304a and 304b.

Fig. 5d shows a schematic example of a second segmentation mask according to operations S5 and S6 of the method of Fig. 1.

The second refined segmentation mask 305 is obtained based on image data of the image 300, using a computer-implemented algorithm, wherein the algorithm is configured to penalize a violation of the user input.

Accordingly, in comparison to the first segmentation mask 303, an image area 305a has been included in the second segmentation mask. Said added image area 305a is determined by the algorithm based on image data, wherein the user input (i.e. the first user-defined area 304a) may be used as a fuzzy user input.

Correspondingly, in comparison to the first segmentation mask 303, an image area 305b has been removed from the second segmentation mask. Said added image area 305a is determined by the algorithm based on image data, wherein the user input (i.e. the second user-defined area 304b) is used as a fuzzy user input.

It has to be noted that the user input does not need to be very accurate. The statistical terms of the algorithm according to the present disclosure can provide a more accurate segmentation boundary, while the user constraints can be taken into account in a fuzzy manner.

Fig. 6 shows a schematic drawing of an ultrasound system 10 according to examples of the present disclosure.

The ultrasound system 10 may be for example a system for refining a segmentation mask according to the present disclosure. The system may for example be configured to perform the method of the present disclosure. However, the method according to the present disclosure may also be (at least partially) performed by an external system.

The ultrasound imaging system 10 may comprise:

- a probe 20,
- a processing unit 30 for processing an image on the bases of signals received by the probe,
- a control panel 40a connected to the processing unit, said control panel at least comprising buttons 41 and a touch pad 42, and
- a display 50 for visualizing the image.

The probe 20 may be associated to the processing unit 30 via a cable 21 and/or via wireless connection(s), and it is able to emit ultrasound waves W into a medium M and to receive ultrasound waves W from the medium M, said received ultrasound waves being consequent or resulting from reflections of said emitted ultrasound waves on diffusing particles inside medium M.

The display screen 50 may be a screen for visualizing the image processed by the processing unit 30. The display 50 may also visualize other information such as scales used in the image, and/or configuration information for the processing or any information such as help information or contextual gesture help for the touch pad 42.

The display screen may by articulated on a support arm 51 for better positioning for the user. The display screen is usually a high-definition screen of a great size (at least 20 inches) for better image visualization to the user.

The control panel 40a is for example a portion of the system casing 31, said portion comprising a panel casing having a substantially flat surface inclined towards the user for manipulation by one hand of said user. The control panel 40a may be moved by a hanger upwards and downward to adapt to the user size, and may be optionally moved frontward and rearward for being adapted to the user position. The control panel 40a may include a control panel display screen 49 for visualizing several configuration information or any information dedicated to the user.

The processing unit 30 may be configured to refine a segmentation mask according to the present disclosure.

The processing unit may also send data to an external device for at least partially performing the method of the present disclosure on the external device. Examples of an external device include a server, a computer, a dedicated workstation , a device for displaying images obtained from the electronic control device or any other external device. Accordingly, the method according to the present disclosure may be carried out by at least one of the processing unit or any of the external devices. Furthermore, the process for building the image data based on acquired data, i.e. compiling the ultrasound image data, may be carried out by the same processing device as that one for optimizing the optimizing a process, or (at least in part) by another one.

According to further examples, the system 10 may include at least one processing unit (or processor) and memory. In examples, the processor and memory unit may be incorporated into the system or may be a computer or computer communicatively linked thereto. Depending on the exact configuration and type of computing device, memory (storing, instructions to evaluate ultrasound data or otherwise perform the methods described herein) may be volatile (such as RAM), nonvolatile (such as RAM, flash memory, etc.), or some combination of the two. Further, the system 10 may also include storage devices (removable and/or non-removable) including, but not limited to, magnetic or optical disks or tape. Similarly, the system 10 may also have input device(s) such as keyboard, mouse, pen, voice input, etc. and/or output device(s) such as a display, speakers, printer, etc. Also included in the environment may be one or more communication connections, such as 4G/5G, WIFI, LAN, WAN, point to point, etc. In embodiments, the connections may be operable to facility point-to-point communications, connection-oriented communications, connectionless communications, etc.

The system 10 may typically include some form of computer readable media. Computer readable media can be any available media that can be accessed by processing unit (or processor) or other devices comprising the operating environment. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media does not include communication media.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, microwave, and other wireless media. Combinations of the any of the above should also be included within the scope of computer readable media.

The system 10 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

The terms "record" and "receive" may be used synonymously throughout this disclosure unless denoted differently.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.


**Claims**

1. A computer-implemented method of refining a segmentation mask, comprising:

> providing a first segmentation mask associated with an image,
> providing a user input comprising a user-defined area of the image,
> obtaining a second segmentation mask by refining the first segmentation mask based on image data of the image using a computer-implemented algorithm,
wherein the algorithm is configured to penalize a violation of the user input.

2. The method of claim 1, wherein

the first segmentation mask is associated with a region of interest in the image,
and/or
the user-defined area of the image is adapted by the user to modify the first segmentation mask, and/or
the user-defined area comprises a first user-defined area adapted by the user to extend the first segmentation mask and/or a second user-defined area adapted by the user to restrict the first segmentation mask.

3. The method of claim 1 or 2, wherein

the algorithm is configured to:
modify the first segmentation mask based on the user-defined area in a fuzzy manner by applying a penalization rule, and/or
include the first user-defined area into the first segmentation mask in a fuzzy manner by applying a penalization rule, and/or
exclude the second user-defined area from the first segmentation mask in a fuzzy manner by applying a penalization rule.

4. The method according to any one of the preceding claims, wherein

the algorithm comprises a penalization rule configured to:
penalize a violation of the user-defined area, and/or
penalize a violation of extending the first segmentation mask by the first user-defined area, and/or
penalize a violation of excluding the second user-defined area from the first segmentation mask.

5. The method according to any one of the preceding claims, wherein

the user input further comprises a user-defined confidence level which is associated with the user-defined area, wherein
the algorithm is configured to penalize a violation of the user input as a function of the user-defined confidence level.

6. The method according to any one of the preceding claims, wherein

the image data comprise statistical criteria on image features, optionally comprising intensity, color, motion and/or texture, and/or
the image data is used by the algorithm to discriminate between image regions to refine the first segmentation mask.

7. The method according to any one of the preceding claims, wherein
the algorithm is configured to exploit statistics of local likelihood, and/or contextual distributions based on the image data to adjust a segmentation boundary of the first segmentation mask.

8. The method according to any one of the preceding claims, wherein

the algorithm is based on a predefined function:

$$\arg \min_{\Phi} J(\Phi) = D(\Phi) + F(\Phi) + R(\Phi) \qquad (1),$$

where $\Phi$ is an implicit level-set function, wherein either $\{x|\Phi(x) < 0\}$ or
$\{x|\Phi(x) > 0\}$ optionally represents an image area inside the first segmentation mask wherein
the function $D(\Phi)$ represents a penalization term configured to penalize a reduced level of fitting of the first segmentation mask compared to the image data,
the function $F(\Phi)$ is configured to penalize a violation of the user input, and

the function $R(\Phi)$ represents a regularization penalization term of the segmentation mask.

9. The method according to any one of the preceding claims, wherein
   the algorithm is configured to compare the local distribution around each of a plurality of image points to the distribution of an image area inside the first segmentation mask and that of outside the first segmentation mask, such that points of similar contextual information are grouped together in the second segmentation mask.

10. The method according to any one of the preceding claims, wherein

   the penalization rule is defined in the predefined function $\arg\min\limits_{\Phi} J(\Phi)$ by the term:

$$F(\Phi) = \int_{\Omega} M_{in}(x)P(v \cdot \Phi)dx + \int_{\Omega} M_{out}(x)P(-v \cdot \Phi)dx \qquad (5),$$

   wherein:

   $M_{in}$ is a mask of all points inside the user-defined area where the segmentation mask should extend into;
   $M_{out}$ is a mask of all points outside the user-defined area where the segmentation mask should be restricted from;
   $v$ is a map of user-defined penalization weights;
   $P(s)$ is a monotone non-decreasing function as a function of the value s.

11. The method according to any one of the preceding claims, wherein
    the first segmentation mask is automatically generated by a computer-implemented algorithm.

12. The method according to any one of the preceding claims, wherein

    the first and/or second segmentation mask is displayed on a display device,
    and/or wherein:

    the first segmentation mask is displayed on a display device,
    the user input is received by an input device,
    the user input and the first segmentation mask are provided to a computing device,
    the computer-implemented algorithm is performed by the computing device to obtain the second segmentation mask, and
    the second segmentation mask is displayed on the display device, optionally adjacent to or instead of the first segmentation mask.

13. The method according to any one of the preceding claims, wherein
    the method is iterated, wherein the second segmentation mask of an iteration N is used as a first segmentation mask in an iteration N+1.

14. A method of generating a training dataset for an artificial intelligence (AI)
    algorithm, comprising:

    applying the method of any one of the preceding claims to a plurality of first segmentation masks to obtain a plurality of second segmentation masks,
    generating the training dataset based the plurality of second segmentation masks and optionally the plurality of first segmentation masks.

15. A method of training an artificial intelligence (AI) algorithm, comprising:

    performing the method of the preceding claim to obtain a training dataset,
    training the artificial intelligence (AI) algorithm in a supervised manner using the training dataset,
    wherein the plurality of first segmentation masks is used as input during training and
    the plurality of second segmentation masks is used as target output.

**16.** A computing device, comprising:

at least one processor, and
at least one memory storing computer-executable instructions, the computer-executable instructions when executed by the processor cause the computing device to perform a method according to any one of the preceding claims.

**17.** The computing device according to the preceding claims,

configured to be associated with a display device, such that the first and/or second segmentation masks is displayed on the display device, and/or
configured to be associated with an input device configured to receive the user input and to provide it to the computing device.

EP 4 485 351 A1

100

| S1 (optional): providing an image |

↓

| S2: providing a first segmentation mask |

↓

| S3 (optional): displaying first segmentation mask |

↓

| S4: providing a user input |

↓

| S5: obtaining a second segmentation mask |

↓

| S6 (optional): displaying second segmentation mask |

S7 (optional): iteration loop

Fig. 1

Fig. 2

S5 :obtaining second segmentation mask

S5a1 (optional): basic refinement of first segmentation mask based on image data

S5a2: penalize violation of user input

S5a3 (optional): considering user-defined confidence

200

S11: providing a set of first segmentation masks

↓

S12: obtaining a set of second segmentation masks

↓

S13: generating a training dataset

↓

Fig. 3

S14: training an AI algorithm

S4: User input

S4a: user-defined area of the image

S4b: extension or restriction of first segmentation mask?

S4b (o.1):
extension:
user-defined area
→ first user-defined area

S4b (o.2):
restriction:
user-defined area
→ second user-defined area

S4c: user-defined confidence level

Fig. 4

Fig. 5a

300

301

302

Fig. 5b

300

303

Fig. 5c

300

304c

304a

303

304b

Fig. 5d

300

305a

305

305b

EP 4 485 351 A1

Fig. 6

20

**Europäisches Patentamt**
**European Patent Office**
**Office européen des brevets**

# EUROPEAN SEARCH REPORT

Application Number

EP 23 31 5261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WENXIAN YANG ET AL: "User-Friendly Interactive Image Segmentation Through Unified Combinatorial User Inputs", IEEE TRANSACTIONS ON IMAGE PROCESSING, IEEE, USA, vol. 18, no. 9, 1 September 2010 (2010-09-01), pages 2470-2479, XP011316788, ISSN: 1057-7149 | 1-6,11, 13,16 | INV. G06T7/11 G06T7/194 |
| Y | * abstract; figures 2-4 * * sections II-A and II-B; | 12,14, 15,17 | |
| A | page 2471 - page 2473 * * sections III-A,III-B,III-C; page 2473 - page 2474 * ----- | 7-10 | |
| Y | EP 3 382 642 A1 (SIEMENS HEALTHCARE GMBH [DE]) 3 October 2018 (2018-10-03) | 12,14, 15,17 | |
| A | * abstract; figures 1-2 * * paragraph [0008] * * paragraphs [0015] - [0018] * * paragraph [0024] * ----- | 1-11,13, 16 | |

TECHNICAL FIELDS SEARCHED (IPC)

G06T

The present search report has been drawn up for all claims

| Place of search | Date of completion of the search | Examiner |
|---|---|---|
| Munich | 8 September 2023 | Fronthaler, Hartwig |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 31 5261

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2023

| Patent document cited in search report | | Publication date | Patent family member(s) | | Publication date |
|---|---|---|---|---|---|
| EP 3382642 | A1 | 03-10-2018 | CN | 108665462 A | 16-10-2018 |
| | | | EP | 3382642 A1 | 03-10-2018 |
| | | | US | 2018276815 A1 | 27-09-2018 |

EPO FORM P0459

For more details about this annex : see Official Journal of the European Patent Office, No. 12/82